# EUROPEAN PATENT APPLICATION

(11) **EP 0 815 731 A1**
(43) Date of publication of application: **07.01.1998**
(21) Application number: 97201907.9
(22) Date of filing: 24.06.1997
(51) Int. Cl.: A21D 8/04, A21D 2/14, A21D 2/02

(54) **Process for producing sourdough**

(30) Priority: 25.06.1996 EP 96201759
(71) Applicant: GIST-BROCADES B.V., NL-2600 MA Delft (NL)
(72) Inventor: Mutsaers, Johanna Henrica Gerdina Maria, 2635 GT Den Hoorn (NL)
(74) Representative: Matulewicz, Emil Rudolf Antonius, Dr.

(57) **Abstract**

The present invention relates to a process for producing sourdough comprising at least an acid sensitive compound and other sourdough ingredients, said process comprising:
(i) preparing an unfermented sourdough from at least
   - an acid generating compound providing the acidic taste of (a) the sourdough or (b) a product baked from this sourdough, without causing substantial inhibition of the acid sensitive compound present in the sourdough, and
   - other sourdough ingredients; and
(ii) fermenting the unfermented sourdough.

## Description

### Background of the invention

The present invention relates to a new process for producing sourdough.

Sourdough is usually prepared by a time-consuming process involving pre-fermentation of part (up to about 20% of the final dough) of the dough. In this pre-fermentation step a part of the dough is fermented with lactic and acetic acid producing bacteria, for example with Lactobacillus species. After this pre-fermentation the other dough ingredients are added and the main fermentation of the dough follows. Several other steps, dependent on regional preferences, may follow and eventually the dough is baked to give sourdough bread or other products based on sourdough.

Pre-fermentation particularly causes problems for the bakers. First of all, pre-fermenting the dough may take 2 to 48 hours which renders this step labour-intensive. Further it is hard to produce a pre-fermented dough of constant quality and this pre-fermentation step renders the process less flexible e.g. when additional breads have to be baked.

In order to overcome these problems, instant preparations that can replace the pre-fermentation step have been developed. Such instant preparations are called sourdough base compositions and provide for the characteristic acidic taste of sourdough derived products. These sourdough base compositions may contain preserved pre-ferments of sourdough, or only the natural fermentation acids normally produced in sourdough or blends of organic acids and acid salts. The following organic acids are used in base compositions for sourdough: acetic, lactic, tartaric, fumaric, malic and citric acid. Presence of the acids in the sourdough base compositions results in these compositions being acidic. Furthermore these compositions immediately render the dough prepared with the sourdough base compositions acidic. The acids present in the sourdough base composition and in the dough produced with this sourdough base composition, inhibit both yeasts and enzymes which are either present in the sourdough base composition or present in the dough produced from this sourdough base composition. To solve this inhibition problem it is necessary for the baker to add more yeast than would have been needed if the acids were absent.

### Summary of the invention

The present invention provides for a new process for producing sourdough, comprising at least an acid sensitive compound and other sourdough ingredients, said process comprising:
(i) preparing an unfermented sourdough from at least
   - an acid generating compound providing the acidic taste of (a) the sourdough or (b) a product baked from this sourdough, without causing substantial inhibition of the acid sensitive compound present in the sourdough, and
   - other sourdough ingredients; and
(ii) fermenting the unfermented sourdough.

The process of the invention provides a sourdough production process wherein acid sensitive compounds are less inhibited during the fermentation of the unfermented sourdough. This means that for example less yeast compared to known sourdough production processes is required in the process according to the invention. Furthermore the invention makes it possible to produce sourdough and baked products from this sourdough with improved qualities obtained by the action of enzymes, as compared to prior art sourdough.

Another aspect of the invention relates to the use of an acid generating compound, which provides the acidic taste of (a) a sourdough or (b) a product baked from this sourdough, without causing substantial inhibition of an acid sensitive compound present in the sourdough, in the preparation of sourdough.

Still another aspect of the invention relates to a baked product obtainable by baking a sourdough prepared according to the process.

The present invention further relates to a sourdough base composition comprising:
(a) an acid generating compound which provides the acidic taste of (a) a sourdough or (b) a product baked from this sourdough, without causing substantial inhibition of an acid sensitive compound present in the sourdough; and
(b) an acid sensitive compound.

### Detailed description of the invention

Throughout this specification the following terms are defined as:

By a sourdough is meant a fermented dough prepared for a bakery product, wherein the dough has, or develops during the baking process, the characteristic acidic taste associated with dough prepared by the fermentation of dough with lactic or acetic acid producing bacteria.

By a sourdough base composition is meant a composition which comprises compounds that provide the characteristic acidic taste of sourdough or baked products prepared from this sourdough, when the sourdough base composition is added to a regular dough. The sourdough base composition can be used to replace the pre-fermentation step in sourdough preparation.

By an acid generating compound is meant a compound, which is not a microorganism, that generates acids in the production process of sourdough or in the production process of sourdough derived bakery products.

By an acid sensitive compound is meant a microbiological compound that looses partly or completely its activity when it is contacted with acid.

By an unfermented sourdough is meant a composition wherein all the starting ingredients for the sourdough have been mixed.

The process according to the invention involves the addition of an acid generating compound providing the acidic taste of (a) the sourdough or (b) a product baked from this sourdough, without causing substantial inhibition of an acid sensitive compound present in the sourdough, to the other sourdough ingredients.

In the process the starting ingredients for the sourdough are mixed, resulting in an unfermented sourdough. Thereafter the unfermented sourdough is fermented in order to obtain a sourdough.

The acid generating compound according to the invention generates less than 50%, preferably less than 40%, more preferably less than 25%, most preferably less than 10%, of their acid before baking of the sourdough.

When the acid is generated during the fermentation of the unfermented sourdough, the pH of the unfermented sourdough slowly decreases due to the acid generated by the acid generating compound. This slowly decreasing pH will finally cause inhibition of the acid sensitive compounds present in the sourdough. However the acid sensitive compound will have been able to perform its activity for a time sufficient to result in the desired effect of the acid sensitive compound. For example when yeast is considered as the acid sensitive compound, the yeast will have provided for its leavening activity comparable to that for yeast in a normal dough. Substantial inhibition of the acid sensitive compound would result in a performance of the acid sensitive compound which is more than 25% less than the performance of the acid sensitive compound in a normal dough. The inhibition caused by the acid generating compound providing an acid generation during the fermentation will be less, than this 25%.

When the acid is generated substantially at the end of the fermentation, the pH of the unfermented sourdough decreases by the action of the acid generating compound at the end of the fermentation. The acid sensitive compound will be inhibited at the end of the fermentation, which will not substantially affect the overall performance of the acid sensitive compound.

When the acid is generated during baking of the sourdough, the pH of the sourdough will not be affected by the acid generating compound present in the unfermented sourdough. The acid sensitive compound present in the unfermented sourdough will be able to perform its activity comparable to fermentation of a normal dough.

The acid generating compound may be a compound which in itself is not an acid.

The acid generating compound may generate the acid for example by the contact with water (e.g. during the fermentation) or upon heating (e.g. during baking).

It may be advantageous for some acid sensitive compounds to provide the acid generation in a later stage, e.g. substantially at the end of the fermentation or during baking, which would make it possible for the acid sensitive compounds to perform their activities before the unfermented sourdough is made acidic.

The acid generating compound preferably is an inorganic acid or an organic compound, other than an organic acid, capable of producing an acid.

The inorganic acid, which can be used in the production of food, may for example be selected from calcium pyrophosphate, sodium pyrophosphate, sodium aluminium phosphate, aluminium potassium phosphate, sodium aluminium sulphate. These compounds are used in slow acting baking powders. Slow acting baking powders do not release the greatest percentage of their leavening gas until the batter is heated in the oven. Preferred inorganic acid generating compounds are compounds of the 'alum-type' (containing aluminium) such as for example sodium aluminium phosphate, aluminium potassium phosphate and sodium aluminium sulphate which are known to produce substantially all of their acid during baking. Most preferred is sodium aluminium phosphate if an inorganic acid is used.

The organic compound, other than an organic acid, capable of producing an acid may for example be an ester or lactone, e.g. glucono-delta-lactone, which upon hydrolysis generates an acid. This hydrolysis may be effected during the fermentation for example by the water present in the unfermented sourdough or by other factors e.g. hydrolysing enzymes (e.g. esterases) present in the unfermented sourdough. Glucono-delta-lactone can also be used in slow acting baking powders and most of the acid will be generated during baking. Glucono-delta-lactone additionally provides an improved flavour to the baked products.

Acid generating compounds like calcium acid phosphate and tartaric acid, which are known as fast acting baking powders are not suited for the present invention, because these compounds generate most of their acid during dough fermentation and thereby inhibit the acid sensitive compounds.

Since the invention relates to processes for producing sourdough and products baked from sourdough, the result is a sour tasting dough or sour tasting bakery product. This is in sharp contrast with products obtained from baking powders. When baking powders are used, in addition to the acid generating compound, sodium carbonates or other CO₂ producing chemical compounds are added to the dough. As a result CO₂ is produced to leaven the dough, which dough will finally not be sour. So in the present invention sodium carbonates or other CO₂ producing chemical compounds are not added to the dough or the amount (on molar H+) of acid is substantially more than the amount of sodium carbonates or other CO₂ producing chemical compounds. By substantially is meant here that the amount of acid:sodium carbonates or other CO₂ producing chemical compounds is at least 1.5:1, preferably at least 2.5:1, more preferably at least 5:1.

The amount of acid generating compound present in the unfermented sourdough will depend on the capacity of the compound to produce acid. In general it can be said that the amount of acid generating compound used in the preparation of the unfermented sourdough is from 0.05% to 5% (weight % of flour weight). Preferably the amount of acid generating compound will be from 0.1% to about 2.5% (weight % of flour weight).

Acid sensitive compounds present in the sourdough are for example yeast, preferably baker's yeast or an enzyme, preferably amylase, xylanase, glucanase, protease, lipase and oxidase.

The yeast is used for the fermentation of the unfermented sourdough. The yeast provides leavening activity and further contributes to the taste of the resulting sourdough. The use of the acid generating compounds of the invention results in less inhibition of the yeast. The baker may therefore use less yeast.

In addition to yeast the sourdough may comprise enzymes. The use of enzymes in the preparation of doughs is well known. The enzymes may be present as mixtures of several enzymatic activities. Enzymes present in the unfermented sourdough are added in order to improve the quality of (a) the sourdough or (b) the product baked from the sourdough. The enzymes may for example provide increased volume, enhanced taste or improved processability of the sourdough.

The other ingredients of the sourdough from which the unfermented sourdough is prepared, are chosen from for example flour, water, salt, and known bread improver components such as other flours, fats, sugars, gluten, starches, emulsifiers, flavours, ascorbic acid, cystein or colours.

Optionally the unfermented sourdough may further comprise salts, or a mixture of salts, of the acids that are produced in the original sourdough pre-fermentation. Such salts may for example be the sodium salts of acetate and/or lactate. When the acid generating compound generates the acid, the salts of acetate and/or lactate become protonated and thereby provide a more genuine sourdough taste.

Basically the unfermented sourdough will comprise at least water and flour as the other ingredients of the sourdough, the use of the other components may vary along the type of sourdough prepared. Many types of sourdough are known; they may differ in regional preferences (German 'Sauerteig'; French 'Pain a Levain') and they may differ in the type of product which can be baked from them. All these types are known per se and the invention includes processes for all these types of sourdough.
For example the sourdough prepared by the process of the invention may be used to produce besides sourdough breads, other types of bread with an acidic taste e.g. rye bread, crackers, waffles, pancakes, pizzas, biscuits and muffins.

The sourdough is prepared from the unfermented sourdough by fermentation, in a manner known per se for producing sourdough. Whereas original sourdough preparation requires a pre-fermentation step, the present invention provides a process for producing sourdough, wherein the pre-fermentation has been eliminated. The process according to the invention comprises the preparation of the unfermented sourdough, followed by the fermentation.

The products baked from the sourdough are prepared in a manner known per se for producing these products.

The acid generating compound may optionally be comprised in a sourdough base composition. The sourdough base composition may be added to the unfermented sourdough as has been described for the acid generating compound. The amounts of sourdough base composition used in the preparation of the unfermented sourdough will depend on the amount of acid generating compound present in the sourdough base composition.

During the storage of the sourdough base composition in dry form, the acid generating compound will not generate free acids in such amounts that would inactivate an acid sensitive compound which is also present in the sourdough base composition. Under normal storage conditions (ambient temperature in a dry room) the acid sensitive compound will substantially keep its activity as it would if the acid sensitive compound were not incorporated in the sourdough base composition.

Since the invention relates to sourdough base compositions, the use of these sourdough base compositions result in a sour tasting dough or sour tasting bakery product. This is in sharp contrast with the result of the use of baking powders. When baking powders are used, in addition to the acid generating compound, sodium carbonates or other CO₂ producing chemical compounds contained in the baking powders, are added to the dough. As a result CO₂ is produced to leaven the dough, which dough will finally not be sour. So in the present invention sodium carbonates or other CO₂ producing chemical compounds are not added to the sourdough base composition or the amount (on molar H+) of acid is substantially more than the amount of sodium carbonates or other CO₂ producing chemical compounds. By substantially is meant here that the amount of acid:sodium carbonates or other CO₂ producing chemical compounds is at least 1.5:1, preferably at least 2.5:1, more preferably at least 5:1.

When the acid generating compound generates acid upon contact with water, this may require some precautions. For example the amount of unbound water provided by other ingredients in the sourdough base composition should be limited to a minimum. Such acid generating compounds could be protected from water by special layers, which layers could further provide for a timed-release.

The acid sensitive compound present in the sourdough base composition may preferably be selected from yeast and/or enzymes.

When the sourdough base composition comprises (baker's) yeast, the yeast will be present in the sourdough base composition in dry form and will provide for the required leavening activity in the sourdough production. The amount of yeast present in the sourdough base composition will be dependent on the dose of the sourdough base composition in the final unfermented sourdough. The amount of yeast present in the final unfermented sourdough will be about the same as for normal baked product production.

Furthermore the sourdough base composition may comprise enzymes, or mixtures of enzymes, that are capable of improving the quality of the sourdough prepared with the sourdough base composition or the quality of the baked product obtained by baking the sourdough prepared with the sourdough base composition.

Enzymes with these sourdough or baked product improving activities are well known in the art. Examples of these enzymes are amylases, xylanases, glucanases, proteases, lipases and oxidases. When these enzymes are incorporated in the sourdough base composition, these enzymes may provide for improved characteristics of the sourdough, just like these enzymes provide in normal dough or baked products (for example increased volume, enhanced taste or improved processability of the dough). The amount of enzymes present in the sourdough base composition will be dependent on the dose of the sourdough base composition in the final unfermented sourdough. The amount of enzyme present in the final unfermented sourdough will be about the same as for normal baked product production.

Since the sourdough base composition does not produce much or any acid during storage, the enzymes will keep their activities just like the usual enzyme containing dough or baked product improving compositions.

Optionally the sourdough base composition may further comprise salts, or a mixture of salts, of the acids that are produced in the original sourdough pre-fermentation. Such salts may for example be the sodium salts of acetate and/or lactate. When the acid generating compound generates the acid, the salts of acetate and/or lactate become protonated and thereby provide for a more genuine sourdough taste. The amount of such salts present in the sourdough base composition will vary from 0 to 1%, preferably from 0.05 to 0.5%.

The sourdough base composition can further comprise other additives that are known in the preparation of sourdough or normal dough for bread and other baked products. For example the sourdough base can further comprise one or more of flours, fats, sugars, gluten, starches, emulsifiers, flavours, ascorbic acid, cystein or colours.

The sourdough base composition can be prepared by using dry mixing techniques, known in the art. After preparation the sourdough base composition is best stored at ambient temperatures in a dry room. The sourdough base composition can be stored for several months without significant loss of acid generating capacity. The acid sensitive compound present in the sourdough base composition will keep its activity for several months at an acceptable level. For example a rest-activity of more than 90% after three months storage under preferred storage conditions can be obtained.

The sourdough base composition can be used in the preparation of sourdough. The usual preparation for the sourdough process can be followed, except for the pre-fermentation step. This pre-fermentation step can be circumvented by adding the sourdough base composition to the unfermented sourdough. Thereafter the unfermented sourdough will be fermented, treated as usual and finally baked to produce a baked product based on the sourdough.

The sourdough base composition will be added to the other sourdough ingredients on the basis of the amount of acid generating compound present in the sourdough base composition compared to the flour in the final unfermented sourdough. The amount of acid generating compound versus flour will be from 0.05% to 5% (weight % of flour weight). Preferably the amount of acid generating compound will be from 0.1% to 2.5% (weight % of flour weight).

The sourdough base composition can be used in the production of various kinds of sourdough which can be used in many different baked products for which the acidic taste of sourdough is desired. Examples of baked products which can be obtained with the sourdough taste, originating from the sourdough base composition added to the normally used dough of these baked products are, besides sourdough bread, other types of bread with an acidic taste e.g. rye bread, crackers, waffles, pancakes, pizzas, biscuits and muffins.

The following examples will further illustrate the invention.

### Example 1

The use of sodium aluminium phosphate in the production of sourdough.
Basic dough ingredients in grams:

| | |
|---|---|
| Sovereign® flour | 100 |
| water | 62 |
| Fermipan®red yeast | 0.7 |
| salt | 2 |
| Energy®GP bread improver | 0.8 |
| Fermipan®red yeast is a commercial dried yeast and Energy®GP bread improver is a commercial bread improver, both obtainable from Gist-Brocades. | |

The dough ingredients were mixed for 3 minutes and 45 seconds in a high speed mixer. Alternatively 1 or 2% of sodium aluminium phosphate (weight % of flour weight) was added. After dividing, the dough was fermented for 50 minutes at 40°C and subsequently baked at 225°C for 25 minutes.

Addition of the sodium aluminium phosphate did not affect the bread improving activities of the added enzymes. The pH of the breadcrumb decreased from 6.2 for the reference to 5.1 and 4.7 for 1 and 2% sodium aluminium phosphate. The taste and smell of both breads with sodium aluminium phosphate was strongly acid.

### Example 2

The use of glucono-delta-lactone in the production of sourdough.
Basic dough ingredients in grams:

| | |
|---|---|
| Sovereign® flour | 100 |
| water | 52 |
| Fermipan®red yeast | 0.8 |
| sugar | 1.5 |
| salt | 2 |
| ascorbic acid | 25 ppm |
| Fermizyme® P200 amylase | 60 ppm |
| Fermizyme® H400 hemicellulase | 150 ppm |

The dough ingredients were mixed for 6 minutes and 15 seconds in a pin mixer. Alternatively 0.6% or 1.2% of glucono-delta-lactone was added. After dividing, the dough is fermented for 40 minutes at 30°C. After punching and moulding the dough is fermented for 70 minutes and subsequently baked at 225°C for 25 minutes.

The pH of the breadcrumb was 6.2 for the reference, 5.1 for 0.6% glucono-delta-lactone and 4.3 for 1.2% glucono-delta-lactone. The bread containing glucono-delta-lactone had a pleasant acid taste and smell, especially the 0.6% dosage. Additionally the glucono-delta-lactone provided an improved flavour.

### Example 3

A sourdough base composition with the following composition was prepared:

| | |
|---|---|
| Fermizyme® P200 amylase | 0.6 |
| Fermizyme® H400 hemicellulase | 1.5 |
| Fermizyme® GO1500 glucose oxidase | 1.0 |
| sodium aluminium phosphate | 20 |
| Amidaine® starch | 30 |
| Provamix® soy flour | 46.9 (all w/w %) |
| Fermizyme® P200 amylase, Fermizyme® H400 hemicellulase, and Fermizyme® GO1500 glucose oxidase are commercially available enzyme preparations obtainable from Gist-Brocades. Provamix® soy flour is obtainable from Vamo Mills and Amidaine® starch is obtainable from the Amylum Group. | |

Enzyme activities were measured as follows:
Amylase activity: the fungal amylase activity was measured at pH= 5.5 and 30°C using Phadebas tablets (Pharmacia) as a substrate and a fungal amylase preparation of 10.000 FAU/g as an internal reference [ 1 F(ungal) A(mylase) U(nit) is equivalent to 10 SKB-units].
Glucose oxidase activity: was determined according to Scott (Scott D. J. Agr. Food Chem. 1 (1953) 727).
Endoxylanase (lyx) activity: was measured by the hydrolysis of xylan from oat spelts suspended (35 g/l) in 1M glycine buffer pH 2.75. The viscosity of the solution was determined by using a capillary viscosimeter (Ubbelhode type) at 47°C. The time (t) needed for the upper meniscus of the liquid to fall down between two reference points was measured within time (T). The slope of the plot of T versus 1/t yields an apparent kinetic constant. 1 lyx unit is the amount needed to reach a value of 1 min-1 for that kinetic constant.

The sourdough base composition was stored for 3 months at ambient temperature. The activity of all enzymes was over 90% after storage.

## Claims

1. A process for producing sourdough comprising at least an acid sensitive compound and other sourdough ingredients, said process comprising:
(i) preparing an unfermented sourdough from at least
- an acid generating compound providing the acidic taste of (a) the sourdough or (b) a product baked from this sourdough, without causing substantial inhibition of the acid sensitive compound present in the sourdough, and
- other sourdough ingredients; and
(ii) fermenting the unfermented sourdough.

2. A process according to claim 1, wherein the acid sensitive compound is selected from yeasts or enzymes or a combination thereof.

3. A process according to claim 1 or 2, wherein the acid generating compound is part of a sourdough base composition which further comprises an acid sensitive compound selected from yeasts or enzymes or a combination thereof.

4. A process according to claim 2 or 3, wherein the yeast is baker's yeast.

5. A process according to claim 2 or 3, wherein the enzymes are selected from amylase, xylanase, glucanase, protease, lipase or oxidase.

6. A process according to any one of the preceding claims wherein the acid generating compound generates less than 50%, preferably less than 40%, more preferably less than 25%, or most preferably less than 10% of their acid before baking the sourdough.

7. A process according to claim 1 wherein the acid generating compound is present in the unfermented sourdough in amounts ,on molar H+, of at least 1.5 times, preferably at least 2.5 times, more preferably at least 5 times the amount of sodium carbonates or other CO₂ producing chemical compounds.

8. A process according to claim 1 wherein the acid generating compound is selected from calcium pyrophosphate, sodium pyrophosphate, sodium aluminium phosphate, aluminium potassium phosphate, sodium aluminium sulphate or glucono-delta-lactone, preferably an alum-type acid generating compound or glucono-delta-lactone.

9. Use of an acid generating compound, which provides the acidic taste of (a) a sourdough or (b) a product baked from this sourdough, without causing substantial inhibition of an acid sensitive compound present in the sourdough, in the preparation of sourdough.

10. Use of sourdough prepared according to any one of claims 1-8, in the production of baked products.

11. A baked product obtainable by baking a sourdough prepared according to any one of claims 1-8.

12. A sourdough base composition comprising:
(a) an acid generating compound which provides the acidic taste of (a) a sourdough or (b) a product baked from this sourdough, without causing substantial inhibition of an acid sensitive compound present in the sourdough; and
(b) an acid sensitive compound.

13. A sourdough base composition as defined in claim 12, wherein the acid sensitive compound is as defined in any one of claims 2 to 5.

14. A sourdough base composition according to claim 12, wherein the acid generating compound is present in the unfermented sourdough in amounts ,on molar H+, of at least 1.5 times, preferably at least 2.5 times, more preferably at least 5 times the amount of sodium carbonates or other CO₂ producing chemical compounds.
